# EUROPÄISCHE PATENTANMELDUNG

(11) **EP 0 587 085 A2**
(43) Veröffentlichungstag der Anmeldung: **16.03.1994**
(21) Anmeldenummer: 93114256.6
(22) Anmeldetag: 06.09.1993
(51) Int. Cl.: A61C 5/06, B01F 13/00

(54) **Verfahren und Einrichtung zum Dosieren und Mischen von Mehrkomponentenmaterialien**

(30) Priorität: 11.09.1992 DE 9212249 U; 21.01.1993 DE 4302085
(71) Anmelder: Ihde, Stefan Klaus Alfred, Dr., CH-8738 Uetliburg (CH)
(72) Erfinder: Ihde, Stefan Klaus Alfred, Dr., CH-8738 Uetliburg (CH)

(57) **Zusammenfassung**

Die Erfindung betrifft ein Verfahren und eine Einrichtung zum Dosieren und Mischen von Mehrkomponentenmaterialien, insbesondere von Zahnfüllstoffen auf der Basis von Dentalzementen, Alloy und Composites sowie deren Derivate.

Um die Herstellung von Unterfüllungen, Füllungen und Zementierungen, die in ihrer stofflichen Zusammensetzung, Konsistenz und Farbe unterschiedlich sind, individuell und schnell anzumischen, wird eine Lösung vorgeschlagen, die einerseits eine individuelle Dosierung und intensive Vermischung der Materialkomponenten gewährleistet und andererseits die Vorteile eines Kapselmisch- und Applikationssystems ausnutzt. Die auf Codekarten vorgegebenen mischgutspezifischen Daten werden zur Prozeßsteuerung einer Dosier- und Mischeinrichtung in einen Rechner eingegeben; anhand der Vorgaben die maximal zulässigen Abweichungen zu festgelegten Grenzwerten und die optimale Mischzeit und Mischkraft ermittelt; die so erhaltenen Daten in Steuersignale umgewandelten und zur Befüllung einer Einraummischkapsel mit den jeweiligen pulverförmigen und flüssigen Materialkomponenten aus bevorrateten Dispensern und nach Einsetzen der befüllten und verschlossenen Mischkapsel in einen Vibrationsmischer zur intensiven Vermischung der Komponenten eingesetzt

## Beschreibung

Die Erfindung betrifft ein verfahren und eine Einrichtung zum mengenmäßig, voneinander unabhängigen, portionsweisen Dosieren und Mischen von Mehrkomponentenmaterialien, die sich aus einer oder mehreren pulverförmigen und flüssigen oder pastösen Komponenten zusammensetzen, insbesondere Zahnfüllstoffen auf der Basis von Dentalzementen, Alloy und Composites oder ihrer Derivate.

Dentalzemente werden bereits mit exakter Dosierung der Einzelkomponenten vordosiert angeboten, wobei die pulverförmigen und flüssigen Komponenten vordosiert in einer Mischkapsel, jedoch in getrennten Kompartimenten vorliegen. Nach einer Aktivierung der Materialkomponenten, die nach dem Stand der Technik durch Drehung der Kapselteile gegeneinander; durch Druck auf ein am Mischraum der Kapsel seitlich (DE-PS 23 24 296 C3) oder rückwärtig (DE 39 20 531 A1, DE 37 18 326 A1) anliegendes Flüssigkeitskissen oder durch Aufstechen eines innenliegenden Flüssigkeitskissens mit einem am Stempel angebrachten Dorn (DE 37 23 985 C2) erfolgt, wird dieses gezielt geöffnet, worauf sich die flüssige Mischkomponente in den Mischraum ergießt. Anschließend wird die Kapsel in einem Vibrationsmischer zur innigen Vermischung der Komponenten einer starken Vibration ausgesetzt. Zur Entleerung des Kapselinhaltes über eine Ausbringöffnung wird ein gegenüber der Ausbringöffnung angebrachter Stempel mit Hilfe eines Ausbringgerätes in das Kapselinnere vorgeschoben, woraufhin sich das Mischgut über die Ausbringdüse entleert. Hierzu muß entweder der Folienbeutel, der die flüssige Komponente enthielt, weiter durchstoßen werden (DE 37 23 985 C2) oder aber ein Korb mit dem Folienbeutel zusammen mit dem Stempel vorgeschoben werden. Im Falle der DE 23 24 296 C3 befinden sich keine Hindernisse zwischen dem Stempel, dem Mischgut und der Ausbringdüse.

Diese bekannten Mischkapseln mit Ausbringdüse haben den Nachteil, daß das Flüssigkeitskissen stets aus einem mehrschichtigen Material hergestellt ist, wobei mindestens eine Lage aus Metall besteht. Die gebrauchten Kapseln bilden daher einen schwer zu entsorgenden Müll, der sich aus Metall-, Kunststoff- und Füllungsanteilen zusammensetzt.
Das Mischungsverhältnis von pulverförmigen und flüssigen Komponenten zueinander ist genau festgelegt. Dies hat einerseits den Vorteil, daß die Mischkomponenten im vom Hersteller vorgegebenen Verhältnis vorliegen. Andererseits kann das Mischungsverhältnis aber anwenderseitig nicht verändert werden. Dies ist insofern nachteilig, da für unterschiedliche Zwecke, beispielsweise für Unterfüllungen, Füllungen oder Zementierung, identische Zahnfüllzemente oftmals in veränderlicher Konsistenz und unterschiedlicher Farbe angemischt werden müssen. Dies ist aber bei den bekannten Kapseln, bei denen der Hersteller das Verhältnis der Mischkomponenten zueinander vorgegeben hat, nicht möglich.
Insbesondere ist auch eine erhebliche Bevorratung von Kapseln nötig, um Mischmaterialien verschiedener Art und Farbe und mit unterschiedlichem Mischinhalt für verschieden große Zahnkavitäten und verschiedene Anwendungszwecke vorrätig zu halten.

Ferner können die bekannten Kapseln nur einmal verwendet werden. Es ist also nicht möglich, die Kapseln nach dem Anmischen in die Einzelbestandteile zu zerlegen und diese nach einer Reinigung wiederzuverwenden, da insbesondere das Folienkissen mit der flüssigen Komponente zerstört wurde.

Die bekannten Mischkapseln mit Ausbringdüse für Zemente müssen aktiviert werden, um die in getrennten Kompartimenten untergebrachten Mischkomponenten miteinander in Verbindung zu bringen. Zudem sind sie durch den viele Schritte beinhaltenden Herstell- und Befüllungsmechanismus teuer.

Allerdings haben die bekannten Mischkapseln auch den Vorteil, daß die angemischte Masse über die Ausbringdüse direkt in die Zahnkavität eingebracht oder auf das zu zementierende Werkstück aufgetragen werden kann. Die Mischkapseln sind handlich und, da sie nur für einen Patienten verwendet werden, auch stets ausreichend sauber.

Bekannt sind ferner mechanisch angetriebene Misch- und Dosierwerke für die Mischungsbestandteile von Zahnfüllungen - DE-PS 1 288 739; DE-PS 1 101 692 -, die das maschinelle Dosieren und Anmischen von Dentalwerkstoffen ermöglichen. Diese Geräte wurden aber speziell für die Dosierung von Amalgam konzipiert.

Dessen Dosierung ist aufgrund des hohen spezifischen Gewichtes des Quecksilbers und der entsprechend guten Fließfähigkeit, sowie aufgrund der Rieselfähigkeit der Alloyfeilung unproblematisch. Außerdem bleibt das Mischungsverhältnis von Alloy und Quecksilber immer relativ konstant. Diese Bedingungen sind jedoch bei der Herstellung von Zahnfüllungen auf der Basis von Dentalzementen nicht gegeben. Die bekannten Einrichtungen besitzen auch keine Steuerung für ein selbsttätiges Dosieren und Anmischen der Materialkomponenten, da sie nur für zwei Materialkomponenten, deren Mischungsverhältnis geringfügig variiert, entwickelt worden sind. Für das Anmischen von Zahnfüllungen aus voneinander unterschiedlichen Mehrkomponentenmaterialien können diese Lösungen daher nicht eingesetzt werden.

Die DE-PS 1 566 287 und DE-PS 2 322 681 schlagen ein Dosier- und Mischgerät für die Herstellung von Zahnfüllungen aus Quecksilber und Amalgam vor, bei denen die Mischungskomponenten mit Hilfe einer Dosierwalze, die getrennte Räume aufweist, zusammengestellt werden. Die dosierten Teilmengen werden anschließend über einen Trichter in ein Mischrohr und danach in eine Mischkapsel geleitet. Um Fehlbedienungen zu vermeiden, ist das Misch- und Dosiergerät erst einschaltbar, wenn eine Mischkapsel aufgesteckt worden ist.

Zum Anmischen einer aus mehreren Komponenten bestehenden Zahnfüllung auf der Basis von Dentalzementen, wie sie zur Herstellung von Unterfüllungen, Füllungen und Zementierungen benötigt werden, ist dieses Dosier- und Mischgerät ebenfalls nicht einsetzbar. Einerseits läßt die vorhandene Dosierwalze eine Dosierung von Mehrkomponentenmaterialien nicht zu. Andererseits würden die schlecht rieselfähigen Dentalzemente die relativ lange Strecke vom Einlauftrichter über das Mischrohr in die Mischkapsel nicht durchfließen. Die gesamte Gefällstrecke wäre aufgrund der hohen Klebefähigkeit der Zemente nach kurzer Zeit kontaminiert und verstopft. Um neben einer hohen Betriebssicherheit das Mischungsverhältnis der anzumischenden Materialkomponenten exakt einzuhalten und die im Dentalbereich notwendige Sauberkeit zu gewährleisten, müßte das vorgeschlagene Gerät nach jedem Anmischvorgang gründlich gereinigt werden.

Aus der DE-OS 2 944 869 ist ein Gerät zum automatischen Abmessen und Dosieren von Flüssigkeiten, insbesondere für Farben bekannt. Dieses Gerät wird vorzugsweise zur Herstellung von Farbmischungen aus verschiedenen Grundfarben eingesetzt, die jeweils in gesonderten Behältern bevorratet und bereitgestellt sind. Die Steuerung und Überwachung der Prozeß- und Funktionsabläufe erfolgt über einen Rechner. Gleichzeitig ist eine Überwachung des Gerätes und der Abfüllprozesse auch durch eine visuelle Anzeige der Daten auf ein Display gegeben. Die einzelnen Mischkenndaten der Farbmischungen können im Rechner gespeichert und für eine eventuelle spätere Reproduktion der Farbzusammensetzung wieder abgerufen werden.

Um die Produktivität von Dosier- und Mischprozessen zu erhöhen und das Bedienpersonal gleichzeitig zu entlasten, sind aus der DE-OS 3 102 611 und DE-OS 2 431 974 Prozeßsteuerungen bekannt, die eine Eingabevorrichtung, einen Auftragsdatenspeicher und einen Prozeßrechner, einschließlich einer an den Rechner angeschlossenen Prozeßsteuerung, aufweisen. Die zuletzt genannten Lösungen betreffen ausnahmslos großtechnische Anlagen, bei denen von vornherein wesentlich größere Toleranzabweichungen in den Mischungszusammensetzungen zulässig sind. Für hochgenaue Dosierungen einer aus mehreren Komponenten bestehenden, mengenmäßig relativ kleinen Zusammensetzung, wie sie im Dentalbereich gefordert werden, sind diese Lösungsvorschläge daher nicht anwendbar oder übertragbar.

Der Erfindung liegt die Aufgabe zugrunde, eine Lösung der eingangs genannten, gattungsgemäßen Art vorzuschlagen, die ein fehlerfreies, schnelles und unkompliziertes Anmischen von Zahnfüllmaterialien unterschiedlicher Zusammensetzung und Konsistenz auf der Basis von Dentalzementen zur Herstellung von Unterfüllungen, Füllungen und Zementierungen gestattet.

Erfindungsgemäß wird die Aufgabe dadurch gelöst, daß die für die anzumischende Füllmasse bestimmten Dosierungen voneinander unterschiedlicher Materialkomponenten mit den Kenndaten für den sich nach der Dosierung anschließenden Mischprozeß über einen Datenträger oder als Code und die benötigte Materialmenge und ihre Konsistenz sowie die Farbe der Mischmasse über eine Tastatur in einen Rechner für die Steuerung einer Misch- und Dosiereinrichtung von Zahnfüllstoffen eingegeben; die dosierten Mengen der einzelnen Materialkomponenten mit im Rechner gespeicherten Daten für eine maximal zulässige Konsistenzabweichung verglichen und die so errechneten Daten in ein Signal zur Steuerung von Mitteln zur Dosierung und Zuführung der pulverförmigen und flüssigen Mischkomponenten in eine Mischkapsel umgesetzt werden. Die von der anzumischenden Zahnfüllmasse bestimmten pulverförmigen und flüssigen Materialkomponenten werden mit Hilfe der Dosiereinrichtung exakt dosiert in eine Einraummischkapsel eingegeben, die nach Verschließen durch einen mit dem Kapselkörper verbundenen Stempel in einen Mischer, vorzugsweise einen Vibrationsmischer, eingesetzt wird, um die Materialkomponenten auf der Grundlage der eingegebenen Mischkenndaten intensiv miteinander zu vermischen.

Die auf den Datenträger, beispielsweise eine Magnetstreifenkarte oder eine Chipkarte, aufgetragenen Mischkenndaten können die notwendigen Informationen und Anweisungen zur Kombination verschiedener pulverförmiger Komponenten untereinander und/oder das mögliche Dosierungsverhältnis zwischen einer oder mehreren pulverförmigen Materialkomponenten und einer oder mehreren Flüssigkeiten enthalten.

Zusammen mit den auf den Datenträger aufgezeichneten Mischkenndaten können nach einem weiteren Merkmal der Erfindung betriebsspezifische Kenndaten der Mischeinrichtung eingegeben und durch den Rechner aus den Vorgaben für die anzumischende Zahnfüllmasse und den eingegebenen Kenndaten der Materialkomponenten die bestmögliche Mischzeit und Mischkraft ermittelt und über eine Steuerleitung an einen Mischer abgegeben werden.

Um die manuellen Tätigkeiten beim Anmischen von Zahnfüllmassen weiter zu vereinfachen oder zu erleichtern, ist es vorteilhaft, die benötigte Menge an Füllmasse und ihre Konsistenz zusammen mit den Kenndaten für die Dosierung und das Mischen der Materialkomponenten über den Datenträger einzugeben.

Ferner können die spezifischen Mischerkenndaten der am häufigsten verwendeten Mischertypen in den Datenspeicher eingespeichert und zum Beginn des Dosier- und Mischprozesses über die Tastatur abgerufen werden.

Eine weitere variationsmöglichkeit besteht darin, diese Mischerkenndaten manuell über die Tastatur in den Prozeßrechner einzugeben. Neben den bereits genannten Magnetstreifenkarten und Chipkarten können die gewünschten Prozeßdaten auch über Barcodes in den Prozeßrechner eingelesen werden.

Die erfindungsgemäße Einrichtung zum Dosieren und Mischen von Mehrkomponentenmaterialien besitzt eine rechnergestütze Betriebssteuerung, wobei an den Rechnereingang neben den Füllstandssignalleitungen der einzelnen Dispenser, in denen die pulverförmigen und flüssigen Materialkomponenten bereitgestellt werden und der Signalleitung für die Betriebsbereitschaft des Mischers eine Dateneingabestation für die auf den Datenträger gespeicherten Mischungskenndaten, ein Datenspeicher für die nicht zu überschreitenden Grenzwerte der Mischkomponenten und eine Eingabetastatur angeschlossen sind. Der Rechnerausgang ist über eine Prozeßsteuereinheit mit der Betriebssteuerung für die Mittel zur Dosierung der Mischkomponenten und mit dem Steuereingang des Vibrationsmischer verbunden.

Die über den Datenträger an den Rechner eingegebenen Kenndaten zur Dosierung und Zusammenstellung der anzumischenden Materialkomponenten dienen nach einer ersten Ausführungsvariante der Erfindung zur Steuerung eines Verschieberiegels, der mit einer Dosieröffnung versehen ist, über die die pulverförmigen und flüssigen Materialkomponenten in den Mischraum einer Einraummischkapsel eingeleitet werden. Hierzu wird die in einer Halterung eingespannte Einraummischkapsel unter die Halterung des jeweiligen Dispensers positioniert. Vorteilhafterweise ist der Verschieberiegel mit einem Nocken ausgestattet, der in Zusammenwirken mit einer Riffelung im Bodenteil der Halterung des Dispensers bei Erreichen der Entleerungsstellung des Verschieberiegels Schwingungen auslöst und dadurch gewährleistet, daß die in der Dosieröffnung befindliche Materialmenge vollständig in den Mischraum der Einraummischkapsel abgegeben und das Entstehen von Materialbrücken innerhalb des Dispensers, die ein störungsfreies Ausfließen des gespeicherten Gutes erschweren, verhindert wird.

Die Vorratsbehälter für die einzelnen Materialkomponenten, die zweckmäßigerweise gleichzeitig als Dispenser dienen, sind im Bereich der gegenüber der Mischkapselöffnung liegenden Seite mit einem in seiner Öffnungsweite veränderbaren Ausbringschlitz versehen, über den die bevorrateten Materialkomponenten abdosiert werden. Zum Zwecke der Unterstützung des Dosierprozesses wird der Vorratsbehälter während des Ausbringens der Materialien zusätzlich in Schwingungen - versetzt, wodurch auch schlecht fließ- und rieselfähige Materialkomponenten sicher und exakt ausgetragen und dosiert werden können.

Die anhand der im Datenträger gespeicherten Mischkenndaten durch den Prozeßrechner festgelegten Steuersignale können nach einer weiteren Ausführungsvariante der erfindungsgemäßen Einrichtung zur Steuerung einer verstell- und bewegbar angeordneten Pipette eingesetzt werden, die mit einer Hubpumpe verbunden ist, um die anzumischenden Materialkomponenten aus den Dispensern dosiert zu entnehmen und in den Mischraum der Einraummischkapsel einzutragen.

Die Einraummischkapsel ist im Bereich ihrer stirnseitigen Einfüllöffnung mit einer umlaufenden Nut versehen und vermittels dieser Nut in einer Halterung, die sowohl ortsfest als auch verfahrbar angeornet werden kann, eingespannt. Der Mischraum der Einraummischkapsel, die bekannterweise über eine Auslaufdüse zum direkten Eintragen des angemischten Füllmaterials in die Kavitation dient, ist durch eine Trennmembran gegenüber der Auslauföffnung der Auslaufdüse verschlossen. Diese Trennmembran wird mit Hilfe eines am Stempel versehenen Dornes beim Ausdrücken des gemischten Füllmaterials durchstochen und mit dem weiteren Vorschieben des Stempels das angemischte Material ausgetragen. Die Auslauföffnung der Auslaufdüse kann aber auch mit Hilfe eines herausziehbaren Dornes verschlossen werden, der beim Ausdrücken des Gemischmaterials vorgeschoben und dann von Hand entfernt wird.

Vorteilhafterweise ist der Kapselkörper der Einraummischkapsel ferner mit Griffteilen ausgestattet, die die Handhabung beim Ausbringen des gemischten Materials erleichtern.

Gemäß einem weiteren Merkmal der vorgeschlagenen Einraummischkapsel ist der Stempel mit Dichtlippen versehen, die in Zusammenwirken mit einer in der Kapsel angeordneten Nut den nach Einmischen der Materialkomponenten zum Verschließen der Kapsel eingesteckten Stempel zusätztlich fixieren und ein Entweichen der angemischten Füllmasse beim Austrag aus die Mischkapsel in den rückwärtigen Raum hinter den Stempel sicher verhindern.

In einer vorteilhaften Ausführung des erfindungsgemäßen Gerätes wird ein Protokoll der Steuerungs- und Dosiervorgänge angefertigt und über einen angeschlossenen Drucker ausgedruckt. Andererseits ist es auch möglich, die Dosierdaten über eine Datenleitung zum normalen Praxiscomputer weiterzuleiten, wo sie den Patientendaten beigefügt werden und somit für die Therapieüberwachung jederzeit zur Verfügung stehen. Solchermaßen können größere Patientenkollektive und eine Großzahl von Füllungs- und Zementierungsmaßnahmen computertechnisch erfaßt und leicht statistisch ausgewertet werden.

Mit Hilfe der vorgeschlagenen Lösung können Zahnfüllstoffe auf der Basis von Dentalzementen in beliebiger Zusammensetzung und mit in Abhängigkeit vom Verwendungszweck unterschiedlicher Konsistenz und Farbe auf einfache Weise in den jeweils günstigsten Mischungsverhältnissen aus unterschiedlichen Materialkomponenten hergestellt werden, wobei die Bedienperson von zusätzlichen Arbeiten zur Dateneingabe und zur Zusammenstellung der notwendigen mischungsspezifischen Daten freigestellt ist. Auf diese Weise werden individuelle Fehler bei der Aufbereitung der Zahnfüllungen vollständig ausgeschlossen und eine hohe Qualität gesichert. Mit Hilfe der vorgeschlagenen Lösung werden die einzelnen Materialkomponenten separat exakt dosiert, in eine einfach aufgebaute und nach entsprechender Reinigung wiederverwendbare Einraummischkapsel eingetragen und anhand genau ermittelteter Mischdaten intensiv miteinander vermischt. Zur exakten Überprüfung des Dosiervorganges wird das Einfüllen des Mischgutes gewichtsmäßig überprüft, wobei die Gewichtsmessung als Kontrolle des ordnungsgemäßen Dosierprozesses in den Rechner eingegeben und regulierend auf die Steuerung einwirkt.

Da dem menschlichen Auge, insbesondere bei unterschiedlicher Beleuchtung, Fehler bei der Beurteilung von Farben unterlaufen und insbesondere die Helligkeit, der Ton und die Sättigung der Färbung der Oberfläche eines Gegenstandes nur schwer objektiv beurteilt werden können, wurden Farbmessysteme entwickelt, die diese Farbeigenschaften absolut objektiv messen und als Raumkoordinaten angeben. Bislang war es nicht möglich, die erhaltenen Ergebnisse bei der Wahl von plastischen Füllungswerkstoffen adäquat umzusetzen, weil die Möglichkeit fehlte, in der gebotenen Kürze der Zeit eine Füllstoff-Mischung von Hand anzufertigen, die dem Messergebnis entspricht. Mit Hilfe des erfindungsgemäßen Verfahrens und dem erfindungsgemäßen Gerät gelingt dies erstmals. So können die erhaltenen Messwerte über Helligkeit, Ton und Sättigung der Farbe eines Zahnes oder beispielsweise des gegenüberliegenden, unzerstörten Zahnes oder einer angrenzenden dentalen Restauration, über eine Farbmessonde, beispielsweise im LAB-System objektiv gemessen werden, exakt im Prozessrechner umgerechnet und direkt in Signale zur Steuerung der Dosiervorrichtung umgewandelt werden.

Der Prozessrechner kann dabei (unter Berücksichtigung der bekannten Opazität des zur Verfügung stehenden und zu dosierenden Füllungserkstoff) sogar materialbedingte Abweichungen hinsichtlich der Sättigung der Farbe berücksichtigen und die Werte für Helligkeit und Ton angleichen. Dieser rechnerische Vorgang kann bei manuellem Anmischen und nach dem bislang bekannten Stand der Technik nicht umgesetzt werden.

Denn es ist ein bekanntes Phänomen, insbesondere bei Dentalwerkstoffen auf Zementbasis, daß trotz "richtiger" Farbwahl aufgrund von hoher Opazität des Werkstoffs eine zu "helle" Füllung resultiert. Durch rechnerische Farbangleichung kann dieser Effekt soweit reduziert werden, daß bei Betrachtung der fertigen Füllung keine oder fast keine Aufhellung mehr sichtbar ist.

In einer weiterfortgeführten Ausführungsform werden durch den Prozessrechner, unter Berücksichtigung der Dateneingabe hinsichtlich der Farbe oder unter Auswertung der Messergebnisse der Farbmessung sogar mehrere hintereinander aufzubringende Schichten von Füllungs-Mischungen ermittelt und dem Bediener vorgeschlagen. Damit gelingt es, Füllungen anzufertigen, die dem echten Erscheinungsbild des Zahnes sehr nahekommen.

Die Erfindung soll nachstehend an einem Ausführungsbeispiel näher erläutert werden. In den dazugehörigen Zeichnungen zeigen:
- Fig. 1: eine schematische Darstellung der Einrichtung zum Dosierung und Mischen von Mehrkomponentenmaterialien
- Fig. 2: eine beispielhafte Anordnung eines Dispensers zur Bereitstellung einer pulverförmigen Materialkomponente
- Fig. 3: eine schematische Darstellung einer Anordnung zum Eintragen dosierter Materialkomponenten in eine Mischkapsel durch Pipettieren
- Fig. 4: eine bevorzugte Ausführung der Einraummischkapsel

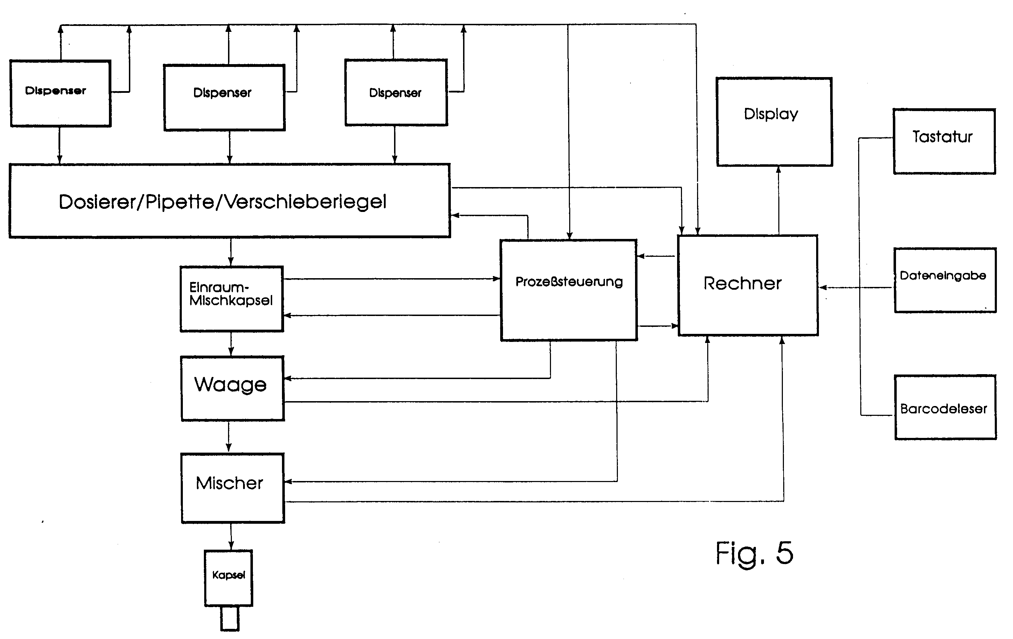

- Fig. 5: das Blockschaltbild der erfindungsgemäßen Dosier- und Mischeinrichtung

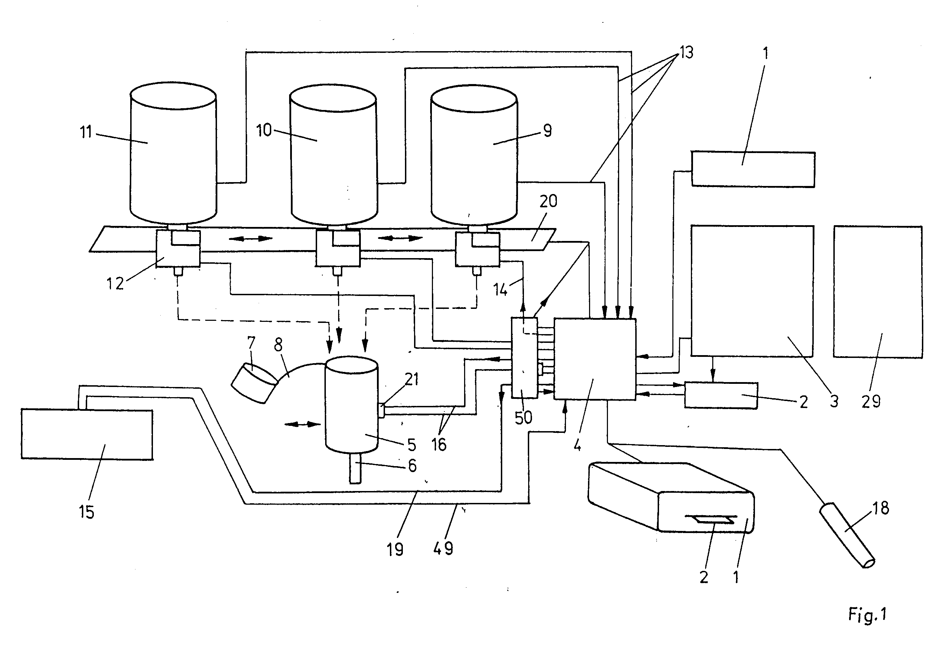

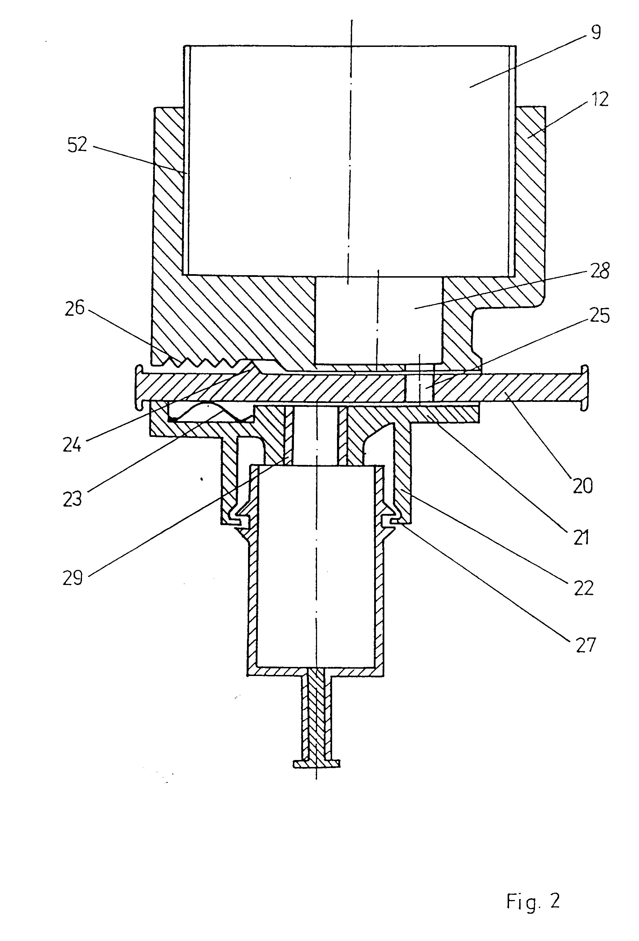

Die in Fig. 1 schematisch dargestellte Einrichtung zum Dosieren und Mischen von Mehrkomponentenmaterialien weist mehrere Dispenser 9; 10; 11 auf, in denen sowohl die in ihrer Farbe und Zusammensetzung unterschiedlichen pulverförmigen Materialkomponenten auf der Basis von Dentalzement und Alloy als auch die flüssigen Materialkomponenten bevorratet und bereitgestellt werden. Die einzelnen Dispenser 9; 10; 11 sind beispielsweise mittels Schraubverbindung 52 - Fig. 2 - in eine Halterung 12 eingesetzt und über Signalleitungen 13 für die Füllstandsanzeige an den Eingang eines Rechners 4 angeschaltet. In einer ersten Ausführungsform der Erfindung sind die Dispenser 9; 10; 11 mit den Halterungen 12 stationär angeordnet, während die Einraummischkapsel 5, die in einer Halterung 21 eingesetzt ist, auf bekannte Weise - nicht dargestellt - in Abhängigkeit von der anzumischenden Zahnfüllmasse zu den jeweiligen Dispensern 9 bis 11 zur Aufnahme der dosierten pulverförmigen und flüssigen Mischkomponenten bewegt wird. Alternativ hierzu kann auch die Einraummischkapsel 5 mit ihrer Halterung 21 stationär, d.h. ortsfest angeordnet werden, während die jeweiligen Dispenser 9; 10; 11 beispielsweise mittels einer Rundtischanordnung in Übereinstimmung mit den eingegebenen Mischkenndaten über die stationär angeordnete Einraummischkapsel 5 verfahren und die gewünschten Materialkomponenten dosiert in den Mischraum eingetragen werden.

Neben den Füllstandssignalleitungen 13 sind an den Eingang des Prozeßrechners 4 eine Datenträgereingabestation 1 für die auf Codekarten, beispielsweise Magnetstreifenkarten oder Chipkarten, gespeicherten Mischkenndaten, ein Datenspeicher 2 zur Speicherung konstanter Daten für den Dosier- und Mischprozeß, eine Tastatur 3 zur individuellen Dateneingabe und die Signalleitung 19 angeschlossen, die die Betriebsbereitschaft eines Mischers, beispielsweise eines Vibrationsmischers 15, an den Rechner 4 leitet. Zur Erweiterung der Misch- und Dosierdateneingabe ist neben der Dateneingabestation 2 für die Codekarten zusätzlich ein Barcodeleser 18 vorgesehen.

Die in ihrer stofflichen Zusammensetzung, Konsistenz und Farbe unterschiedlichen, mischungsspezifischen Kenndaten zur Herstellung einer Unterfüllung, einer Füllung oder für die Zementierung von Kavitäten sind auf einer Codekarte gespeichert und werden über die Dateneingabestation 2 in den Rechner 4 eingegeben. Aus diesen Vorgaben, den im Datenspeicher 4 gespeicherten Daten, beispielsweise den Leistungsdaten des angeschlossenen Vibrationsmischers 15 und den beispielsweise über die Tastatur 3 eingegebenen Mengenangaben zur benötigten Füllmasse, werden im Rechner 4 die bestmögliche Mischzeit und Mischkraft ermittelt. Gleichzeitig werden diese Daten mit den im Datenspeicher 2 eingespeicherten, maximal zulässigen Grenzwerten für die Zusammensetzung der anzumischenden Materialkomponenten verglichen. Die eingegebenen Daten werden durch das am Rechner angeschlossene Display 17 nochmals optisch dargestellt und können gegebenenfalls korrigiert oder ergänzt werden.

Die vom Rechner 4 auf der Grundlage der Vorgaben ermittelten spezifischen Daten für jede individuell anzumischende Füllmasse werden in Steuersignale umgewandelt und über die Prozeßsteuerung 50 und die Steuerleitungen 14; 16; 19, an die Dosiereinrichtungen der Dispenser 9; 10; 11 an die Positionierung der Einraummischkapsel 5 und an den Vibrationsmischer 15 geleitet. Nach dem Einfüllen der dosierten pulverförmigen und flüssigen Materialkomponenten in die Einraummischkapsel 5 wird diese durch den Stempel 7, der über die flexible Verbindung 8 an den Kapselkörper angelenkt ist, verschlossen und zur intensiven Vermischung der Materialkomponenten in die Aufnahmegabel des Vibrationsmischers 15 eingesetzt.

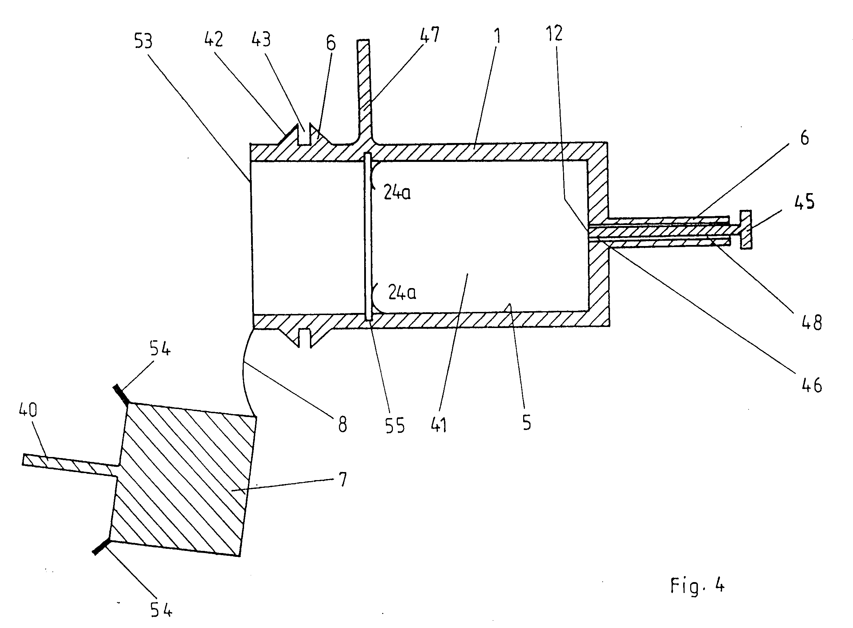

Um eine individuelle Dosierung zu gewährleisten und gleichzeitig die Vorteile eines Kapselmisch- und Applikationssystems zu nutzen, wird eine Mischkapsel 5 mit einer vollständig offenen, durch einen Stempel 7 verschließbaren Stirnseite 53 und einer an der gegenüberliegenden Seite vorgesehenen Auslaufdüse 6 verwendet - Fig. 4. Die Mischkapsel 5 besteht nur noch aus einem einzigen Mischraum 41 und enthält keine weiteren Kompartimente. Der Mischraum 41 der Mischkapsel 5 ist gegenüber der Öffnung 48 der Auslaufdüse 6 optionell durch eine Trennmembran 46 verschlossen. Auf diese Weise wird verhindert, daß sich während des Dosier- und/oder Mischprozesses Mischungsbestandteile in der Öffnung 48 absetzen und sich so dem Mischprozeß entziehen. Beim Vorschieben des in die Mischkapsel eingesetzten Stempels 7 wird vermittels des am Stempel befindlichen Dornes 40 die Trennmembran 41 durchstoßen und anschließend die im Mischraum 41 befindliche angemischte Füllmasse ungehindert über die Öffnung 48 der Auslaufdüse 6 aus der Kapsel ausgetragen und in die zu füllende Kavität eingebracht. In einer alternativen Ausführung wird die Öffnung 48 durch einen stiftförmigen Einsatz 45 verschlossen, der, um ein selbsttätiges Herauslösen zu verhindern, mit ausreichend festem Sitz in die Öffnung 48 eingeführt ist. Beim Austrag der angemischten Füllmasse wird zunächst der Einsatz 45 soweit vorgeschoben, daß er von Hand herausgezogen werden kann. Danach ist ein ungehindertes Ausbringen der Füllmasse gewährleistet. Der in die Mischkapsel einsetzbare Stempel 7 ist ferner mit Dichtlippen 54 versehen, die in eine innere radiale Nut 55 beim Einsetzen des Stempels 7 in die Kapsel 5 eingreifen und den Stempel 7 gegen ein mögliches Herausrutschen aus der Kapsel 5 zusätzlich fixieren. Gleichzeitig verhindern die Dichtlippen 54, daß sich das angemischte Gut an dem sich vorschiebenden Stempel 7 vorbei in den rückwärtigen Teil der Mischkapsel 5 entleert und nicht über die Auslaufdüse 6 ausgepreßt wird. Am Außenmantel der Mischkapsel ist eine durch Auflaufschrägen 42 begrenzte äußere Nut 43 vorgesehen, in die die Zapfen 27 der Haltearme 22 einer Halterung 21 zur Positionierung der Einraummischkapsel 5 während des Dosierprozesses eingreifen. Die Nut 43 dient ferner zum Ansetzen eines Ausbringgerätes, mit dessen Hilfe der eingesetzte Stempel 7 vorgeschoben und das Ausbringen der angemischten Füllmasse erleichtert wird. Unterhalb der durch Auflaufschrägen 42 begrenzten Nut 43 ist vorteilhafterweise ein Griffelement 47 zur leichteren Handhabung der erfindungsgemäßen Mischkapsel 5 vorgesehen.

Gegenüber den bisher bekannten Kapseln mit Ausbringdüse ist die vorgeschlagene Einraummischkapsel 5 sowohl in ihrer Konstruktion als auch in ihrer Herstellung wesentlich einfacher und kostengünstiger. Trennschichten zur Bildung von Kompartimenten innerhalb der Kapsel sind vollständig überflüssig. Außerdem kann auf das Einbringen von Folienkissen verzichtet werden. Nach vollständigem Ausbringen der angemischten Füllmasse wird die Mischkapsel gründlich gereinigt und kann nach Zusammenstecken der einzelnen Kapselteile einer Wiederverwendung zugeführt werden. Wird auf die Wiederverwendung der vorgeschlagenen Einraummischkapsel 5 verzichtet, kann diese auf einfache Weise entsorgt werden.

Wie aus Fig. 2 hervorgeht, ist der Dispenser 9 zur Bevorratung einer pulverförmigen Materialkomponente mittels einer Gewindeverbindung 52 in eine Halterung 12, die sowohl ortsfest als auch bewegbar angeordnet werden kann, eingesetzt. Die Halterung 12 weist bodenseitig einen Auslauf 28 mit einer Auslaufbohrung auf, die mit einer Dosieröffnung 25 in einem bewegbaren Verschieberiegel 20 kommuniziert. Unterhalb des Verschieberiegels 20 befindet sich eine Halterung 21, in deren Halterarme 22 die zu befüllende Einraummischkapsel 5 formschlüssig eingespannt ist. Die Halterung 21 besitzt ein Einlaufrohr 29, über das die mit Hilfe der Dosieröffnung 25 im Verschieberiegel 20 dosierte Materialmenge in die Einraummischkapsel 5 entleert wird. Wie bereits dargelegt kann die Halterung 21 bei ortsfest positionierten Dispensern 9; 10; 11 beweglich und bei beweglich angeordneten Dispensern ortsfest angeordnet werden. In einer Ausnehmung der Halterung 21 ist eine Feder 23 vorgesehen, die den Verschieberiegel 20 gegen den bodenseitigen Teil der Halterung 12 drückt. Ferner ist der Verschieberiegel 20 an einem Ende mit einem Nocken 24 versehen, der mit einer Riffelung 26 im Bodenteil der Halterung 12 zusammenwirkt und bei Erreichen der Entleerungsstellung des Verschieberiegels 20 Schwingungen auslöst, um ein vollständiges Entleeren des in der Dosieröffnung 25 befindlichen pulverförmigen Materials zu gewährleisten. Es hat sich gezeigt, daß kohäsives Zementpulver ohne mechanische Einwirkungen leicht in der Dosierbohrung 25 haften bleibt und dadurch Störungen im Dosierprozeß verursacht werden. Die im Zusammenwirken des Nocken 24 mit der Riffelung 26 ausgelösten Schwingungen verhindern außerdem das Entstehen von Materialbrücken innerhalb des Dispensers 9, wodurch ein störungsfreier Zulauf des Materials in den Zulauf 28 verhindert werden könnte. Die Verstellung des Verschieberiegels 20 zur Entleerung des in der Dosierbohrung 25 befindlichen Materials und seine Zurückführung in die Ausgangsstellung erfolgt mit Hilfe bekannter Mittel über die Prozeßsteuerung 50 anhand der eingegebenen und vom Rechner 4 ermittelten Daten.

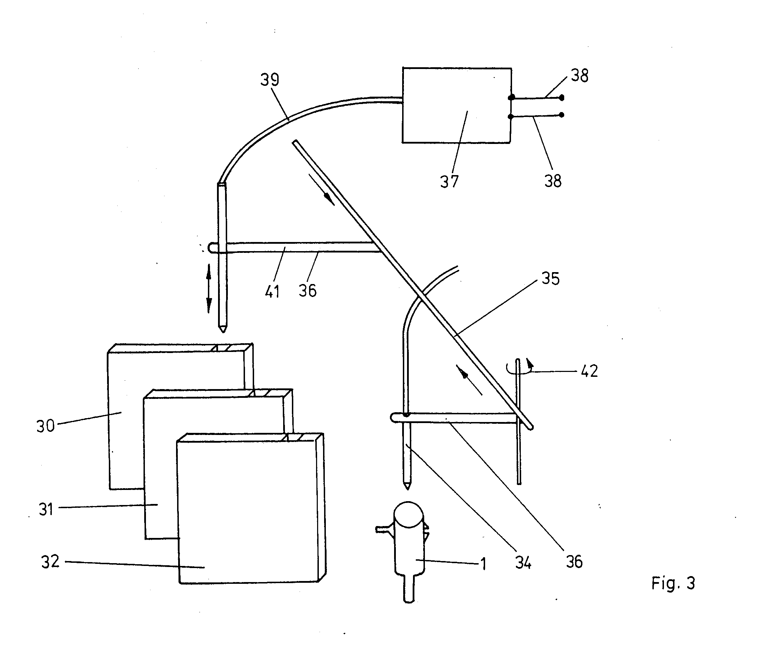

Eine weitere Möglichkeit zum individuellen Befüllen einer Einraummischkapsel 5 mit einer exakt dosierten Materialmenge ist in Fig. 3 dargestellt, wobei die Entnahme der Materialkomponenten und das Einfüllen derselben in die Einraummischkapsel 5 mit Hilfe einer Pipettenanordnung erfolgt. Die zur Dosierung und Zuführung der pulverförmigen und flüssigen Materialkomponenten dienende Pipette 34 ist in einer Halterung 36 eingespannt und sowohl in vertikaler als auch in horizontaler Ebene entlang einer Schiene 35 bewegbar. Die anhand der eingegebenen Daten aufzunehmenden Materialkomponenten werden mit Hilfe einer Hubpumpe 37 dosiert, die über Steuerleitungen 38 mit der Prozeßsteuerung 50 verbunden ist und an die die Pipette 34 über eine flexible Verbindung 39 angeschlossen ist. Die pulverförmigen und flüssigen Materialkomponenten werden wiederum in Dispensern 30, 31 und 32 bevorratet, in die die Pipette 34 zur Aufnahme der gewünschten Materialmengen eingesteckt, die gewünschte Materialkomponente mit Hilfe der Hubpumpe dosiert aufgenommen und nach Verfahren der Pipette über die an ihrer Stirnseite 53 offene Einraummischkapsel 5 in den Mischraum 41 eingetragen wird. Die Ansteuerung der Pipettenbewegung erfolgt wiederum über die vom Rechner 4 gesteuerte Prozeßsteuerung 50.

Zur Pulverdosierung eignen sich insbesondere auch flexibelwandige Dispenser, die an ihrer untersten Stelle mit einem Schlitz versehen sind, wobei der Schlitz mechanisch unterschiedlich weit aufgezogen und verschlossen wird und gleichzeitig durch rhythmisches Klopfen auf die Außenseite der Dosiereinrichtung die Mischkomponente in Bewegung versetzt wird. Dadurch gelingt es, auch kohäsive Pulver feinst zu dosieren.

Ein Dosiervorgang wird nachfolgend beispielhaft erläutert:
Gegeben sei ein erfindungsgemäßes Dosiergerät mit mindestens fünf Lager- und Dosierplätzen für pulverförmige Materialkomponenten und zwei Lager- und Dosierplätzen für flüssige und/oder pastöse Materialkomponenten.
Gefordert wird die Anfertigung einer Füllmasse der Farbe A, in der Menge I, mit einer mittleren Konsistenz.

Die Farbe A setzt sich, wie im Speicher eingegeben, aus den Pulverkomponenten 1 (30 %), 2 (10 %), 3 (50 %), 4 (8 %) und 5 (2 %) zusammen. Hinsichtlich der Dosierung von Pulver und Flüssigkeit liegen folgende Vorgaben vor:

| Konsistenz: | Flüssig | Mittel | Fest |
|---|---|---|---|
| | Dosierverhältnisse (Gewichtsanteilig) (Pulver : Flüssigkeit) | | |
| Komponente 1 | 1 : 5.5 | 1 : 4.3 | 1 : 2.3 |
| Komponente 2 | 1 : 5.5 | 1 : 4.3 | 1 : 2.3 |
| Komponente 3 | 1 : 4.8 | 1 : 3.9 | 1 : 2.0 |
| Komponente 4 | 1 : 2,9 | 1 : 2.1 | 1 : 1.1 |
| Komponente 5 | 1 : 5.5 | 1 : 4.3 | 1 : 2.3 |

Die Komponenten 1 bis 3 werden stets mit Flüssigkeit 1 gemischt, die Komponenten 4 und 5 werden stets mit Flüssigkeit 2 gemischt. Flüssigkeit 1 und Flüssigkeit 2 können in einer Mischkapsel miteinander vermischt werden. Es besteht eine Kompatibilität zwischen allen verwendeten Flüssigkeiten und Pulvern. Dieser Umstand ist für den Rechner aus den Mischgutkenndaten in Kombination mit den gespeicherten Daten erkennbar.

Dem Rechner liegen über die Füllstandssignalleitungen Informationen über die ausreichende Befüllung der betroffenen Lagerorte und deren Vorratsbehälter vor. Diese Informationen können auch über die vorausgegangenen Entnahmen seit der letzten Neubefüllung gewonnen werden.

Die Dosierverhältnisse für die jeweilige Komponente wurden zusammen mit der Farbvariante und dem Lagerort in der Dosiereinrichtung bei der Bestückung der Einrichtung in den Rechner eingegeben und gespeichert.

Als Mengen, die beispielsweise im Datenspeicher Rechner eingegeben wurden, sind festgelegt:
I 400 mg Pulver, zuzügl. die entsprechende Menge Flüssigkeit
II 600 mg Pulver, zuzügl.Flüss.
III 800 mg Pulver, zuzügl.Flüss.

Der Dosiervorgang läuft wie folgt ab, wobei die Reihenfolge der pulverkomponenten unerheblich ist.
- Komponente 1:: 120 mg
- Komponente 2:: 40 mg
- Komponente 3:: 200 mg
- Komponente 4:: 32 mg
- Komponente 5:: 8 mg
Die Befüllung der Mischkapsel wird jeweils für die einzelne Füllkomponente überprüft.

Aus der Konsistenzvorgabe "Mittel" und den Dosierverhältnissen errechnet sich die Befüllung mit:
- Flüssigkeit 1: 120 mg x 4.3
40 mg x 4.3
200 mg x 3.9
- Mittleres Verhältnis:: 1 : 4.077
- Anzurechnende Pulvermenge:: 360 mg
- Einzubringende Flüssigkeitsmenge (1):: 1467,99 mg
- Flüssigkeit 2: 32 mg x 2.1
8 mg x 4.3
- Mittleres Verhältnis:: 1 : 4.064
- Anzurechnende Pulvermenge:: 40 mg
- Einzubringende Flüssigkeitsmenge (2):: 162,56 mg
- Gesamt-Füllmenge:: 2.030,55 mg

### Mischzeit-Berechnung:

Für die Flüssigkeit 1 wird eine optimale Mischzeit von 10 Sekunden angenommen. Für die Flüssigkeit 2 beträgt diese Mischzeit 6 Sekunden. Da ein wesentlicher Teil der Mischzeit für Lösungsvorgänge benötigt wird, die vorgängig zur Durchmischung ablaufen, wird stets die längste Mischzeit einer Einzelkomponente als Mischzeit vorgegeben. In diesem Fall beträgt die Mischzeit also 10 Sekunden. Im Falle von separatem Mischen wird diese Information dem Bediener über das Display angezeigt. Integrierte Mischer werden entsprehend gesteuert.

## Patentansprüche

1. Verfahren zum Dosieren und Mischen Von Mehrkomponentenmaterialien, insbesondere Zahnfüllstoffen, auf der Basis von Dentalzementen, Alloys und Composites, und zum Dosieren von zahntechnischen Werkstoffen, insbesondere von Keramikpulvern und Verblendwerkstoffen, unter Verwendung eines Datenträgers oder von Codes zur Eingabe vorbestimmter Daten zur Steuerung eines Dosier- und Mischprozesses von in Einraum-Mischkapseln abzufüllenden Materialkomponenten,
**dadurch gekennzeichnet**,
daß die für die anzumischende Füllmasse bestimmenden Dosierkenndaten der Materialkomponenten, die auch Informationen über die maximal zulässigen Mengenverhältnisse und über die möglichen Dosierverhältnisse einschließen, zusammen mit den Mischkenndaten für den nachfolgenden Mischprozeß, bei der Bestückung der Lagerorte mit Mischgut über einen Datenträger oder einen Code und die Menge der anzumischenden Masse und die Vorgaben über die Art der anzumischenden Masse,
einschließlich ihrer Konsistenz über eine Tastatur oder Barcodes in einen Rechner zur Steuerung einer Einrichtung zum Dosieren und Mischen von Zahnfüllstoffen eingegeben; die Dosiermengen der Materialkomponenten aus den gespeicherten Daten und vorgenannten Eingaben errechnet und in ein Signal zur Steuerung von Mitteln zur Dosierung und Zuführung der pulverförmigen und flüssigen oder pastösen Mischkomponenten in einen Mischbehälter oder in eine Mischkapsel umgesetzt, und im Falle der Mischkapsel, nach Verschließen derselben die in der Mischkapsel oder dem Mischbehälter befindlichen Materialien auf der Grundlage von errechneten oder eingegebenen Mischkenndaten miteinander vermischt werden.

2. Verfahren nach Anspruch 1,
**dadurch gekennzeichnet**,
daß die Farbangaben der anzumischenden Masse über Buchstaben- und Nummercodes eingegeben werden, wobei der Rechner unter Auswertung der Daten über die Bestückung der Lagerorte für die pulverförmigen, flüssigen oder pastösen Komponenten, das notwendige Dosierverhältnis der unterschiedlichen Mischgutkomponenten in Abhängigkeit von der gewünschten Menge der anzumischenden Masse und der gewünschten Konsistenz errechnet und in Signale zur Steuerung von Dosiermitteln umsetzt.

3. Verfahren nach Anspruch 1 und 2,
**dadurch gekennzeichnet**,
daß die benötigte Füllmasse und ihre Konsistenz zusammen mit den Daten für die Dosierung der Materialkomponenten über einen Datenträger, der optionell auch die Daten über Mischdauer und Mischfrequenz enthält, eingegeben werden.

4. Verfahren nach Anspruch 1 bis 3,
**dadurch gekennzeichnet**,
daß die (für die Füll-Materialien unterschiedlicher Herstellung) spezifischen Dosierkenndaten, einschließlich der Mischungsverhältnisse von Pulver und Flüssigkeit und den Angaben über die Kompatibilität, von Füll-Materialien unterschiedlicher Art, Einfärbung und Hersteller in einem Datenspeicher vorgehalten und für die Steuerung einer Dosiereinrichtung vom Rechner abgerufen werden.

5. Verfahren nach Anspruch 1 bis 4,
**dadurch gekennzeichnet**,
daß die Dosierung der Mischkomponenten gewichtsmäßig überwacht wird. wobei der Gewichtsanteil jeder einzelnen Mischkomponente während der Dosierung gemessen und das Verhältnis von Pulver- und Flüssigkeitskomponenten zueinander aus der Menge der pulverförmigen Komponenten und deren jeweiligen Pulver-Flüssigkeits-Koeffizienten unter Berücksichtigung der materialspezifischen Desierkenndaten und der eingegebenen gewünschten Konsistenz der Mischmasse errechnet und das Wägeergebnis der bereits eingefüllten Menge des jeweiligen Mischgutes in den Rechner eingegeben wird.

6. Verfahren nach Anspruch 5,
**dadurch gekennzeichnet**,
daß die Dosierung der Komponenten volumetrisch erfolgt.

7. Verfahren nach einem der Ansprüche 1 bis 5,
**dadurch gekennzeichnet**,
daß ein Bericht über die vorgenommenen Dosierungen angefertigt wird, der wahlweise ausgedruckt oder durch Datenübertragung an einen separaten Praxiscomputer geleitet wird, wobei die Daten über die Dosierungs- und Mischverhältnisse und über die verwendeten Chargen den Patientendaten beigefügt werden.

8. Verfahren nach einem der Ansprüche 1 bis 7,
**dadurch gekennzeichnet**,
daß die Daten über die Farbangabe der zu mischenden Masse über ein mit der Vorrichtung über Datenleitung verbundenes elektronisches Farbmessystem ermittelt werden und im Prozessrechner direkt in Signale zu Steuerung von Dosiermitteln umgerechnet werden.

9. Verfahren nach Anspruch 8,
**dadurch gekennzeichnet**,
daß die nach einem Farbmessystem ermittelten Farbwerte über die Tastatur in den Prozessrechner eingegeben werden, wobei die Farbinformation als Werte von Helligkeit und/oder Ton und/oder Sättigung der Farbe definiert sind.

10. Verfahren nach Anspruch 8 und 9,
**dadurch gekennzeichnet**,
daß zur Reproduktion der gemessenen Farbwerte vom Prozessrechner mehrere nacheinander aufzubringende Schichten von individuellen Füllungsmischungen mit unterschiedlichen Helligkeiten, Farbtönungen und Farbsättigungen errechnet und dem Bediener vorgeschlagen werden.

11. Einrichtung zur Durchführung des Verfahrens nach Anspruch 1 bis 10, bestehend aus Dispensern für die Bevorratung und Abgabe pulverförmiger und flüssiger oder pastöser Materialkomponenten, ferner bestehend aus Dosiereinrichtungen zur mengenmäßigen, voneinander unabhängigen, portionsweisen Dosierung der gewünschten Mischungsbestandteile, die durch eine rechnergestützte Steuerung betätigt werden, ferner bestehend aus einem integrierten oder separaten Vibrationsmischer, der die in eine Mischkapsel mit einer Ausbringöffnung und einem verschiebbaren Stempel eingebrachten Materialkomponenten intensiv durchmischt,
**dadurch gekennzeichnet**,
daß an den Eingang des Rechners (4) der Betriebssteuerung neben den Füllstandssignalleitungen der Dispenser (9, 10, 11) und der Betriebsbereitsschaftssignalleitung (19) eines Mischers (15) eine Dateneingabestation (1) für die auf Datenträgern gespeicherten oder über Codes einzugebenden mischgutspezifischen Daten, ein Datenspeicher (2) für die nicht zu überschreitenden Grenzwerte der Mischkomponenten sowie für die Vorhaltung der mischgutspezifischen Verrechnungsdaten, ferner eine Eingabetastatur (3) und der Signalausgang einer Kontrollwaage angeschlossen sind und der Rechnerausgang mit der Prozeßsteuerung (50) für die Mittel zur Dosierung der Mischkomponenten und für die Steuerung des Mischers (15) verbunden ist, wobei alle Mischkomponenten der gewünschten Füllmasse über eine offene Stirnseite (53) aus dem Vorratsbehälter in den Mischraum (41) einer Einraummischkapsel (5) eingebracht und die Einraummischkapsel (5) nach dem dosierten Einfüllen der Mischkomponenten durch einen vorschiebbaren Stempel (7), der gleichzeitig als Vorschubstempel zur Entleerung der Kapsel dient, verschließbar ist.

12. Einrichtung nach Anspruch 11,
**dadurch gekennzeichnet**,
daß die zur Herstellung der Füllmasse erforderlichen mischgutspezifischen Daten auf Magnetstreifenkarten oder Chipkarten gespeichert sind.

13. Einrichtung nach Anspruch 11,
**dadurch gekennzeichnet**,
daß die mischgutspezifischen Daten über Zahlen- oder Nummerncodes in Übereinstimmung mit der Bestückung der Lagerorte (9-11) in den Datenspeicher (2) eingelesen sind.

14. Einrichtung nach Anspruch 11,
**dadurch gekennzeichnet**,
daß die zur Herstellung der Füllmasse notwendigen DAten über einen Barcodeleser eingegeben werden.

15. Einrichtung nach einem der Ansprüche 11 und 14,
**dadurch gekennzeichnet**,
daß die flüssigen Materialkomponenten über eine Pipette (34), die mit Hubpumpen oder Dosierspritzen verbunden sind, dosiert in den Mischraum (41) der Einraummischkapsel (5) eingegeben werden.

16. Einrichtung nach Anspruch 11,
**dadurch gekennzeichnet**,
daß die Mittel zur Dosierung der anzumischenden Materialkomponenten einen, mit Dosieröffnungen (25) versehenen Verschieberiegel (20) umfassen, der miteinem Nocken (24), der in Zusammenwirken mit einer Halterung (12) vorhandenen Riffelung (26) bei Erreichen der Entleerungsstellung des Riegels Schwingungen auslöst, versehen ist.

17. Einrichtung nach einem der Ansprüche 11 bis 16,
**dadurch gekennzeichnet**,
daß die als Dispenser (9, 10, 11) eingesetzen Vorratsbehälter einen Ausbringschlitz mit steuerbarer Öffnungsweite besitzen und während des Abdosierens in Schwingungen versetzbar sind.

18. Einrichtung nach Anspruch 11 und 16,
**dadurch gekennzeichnet**,
daß der Verschieberiegel (20) in einer Halterung (12) der Dispenser (9, 10, 11) verschiebbar gelagert und die Einraummischkapsel (5) unter einem Einlaufrohr (29) zwischen Haltearme (22) einer Halterung (21) positioniert ist.

19. Einrichtung nach Anspruch 11,
**dadurch gekennzeichnet**,
daß der Mischraum (41) der Einraummischkapsel (5) gegenüber der Auslaufdüse (6) durch eine Trennmembrane (46), die während des Ausbringvorganges durch einen am Stempel (7) angebrachten Dorn (40) durchstoßen wird, verschlossen und der Stempel (7) an die Mischkapsel (5) durch eine flexible Verbindung (8) angelenkt ist.

20. Einrichtung nach Anspruch 11 und 18,
**dadurch gekennzeichnet**,
daß die Einraummischkapsel im Bereich ihrer offenen Stirnseite eine umlaufende Nut (43) oder Griffelemente (47)( aufweist.

21. Einrichtung nach Anspruch 11 , 18 und 19,
**dadurch gekennzeichnet**,
daß die Öffnung (48) der Auslaufdüse (6) durch einen stiftförmigen Einsatz (45) verschlossen ist.

22. Einrichtung nach Anspruch 11, 18 bis 20,
**dadurch gekennzeichnet**,
daß der Stempel (7) mit einer Dichtlippe (54) versehen ist, die mit einer radialen Nut (55) in der Einraummischkapsel (5) zusammenwirkt.
